# EUROPEAN PATENT APPLICATION

(11) **EP 2 592 541 A2**
(43) Date of publication of application: **15.05.2013**
(21) Application number: 12191763.7
(22) Date of filing: 08.11.2012
(51) Int. Cl.: G06F 3/0488, G06F 3/0483

(54) **System and method for executing an e-book reading application in an electronic device**

(30) Priority: 08.11.2011 KR 20110115773
(71) Applicant: Samsung Electronics Co., Ltd, Gyeonggi-do 443-742 (KR)
(72) Inventor: Jang, Sihak, 443-742 Gyeonggi-do, (KR); Kim, Yuran, 443-742 Gyeonggi-do, (KR); Lee, Boran, 443-742 Gyeonggi-do, (KR)
(74) Representative: Harrison Goddard Foote

(57) **Abstract**

A system and method execute an e-book reading application in an electronic device with a touch screen, via a touch gesture. The e-book reading application executing system includes: a touch screen arranged to sense a touch gesture; a storage unit arranged to store a look up table, LUT; a controller arranged to receive an input indicative of the sensed touch gesture from the touch screen while controlling the display of a first page of an e-book, to determine whether the input is indicative of a touch gesture to turn over pages of the e-book by referring to the LUT, and to identify, if the input is indicative of a touch gesture corresponding to a touch gesture to turn over pages of the e-book, a second page to be turned to according to the input; and a display unit arranged to displaying the second page.

## Description

### BACKGROUND OF THE INVENTION

### FIELD OF THE INVENTION

This invention relates to e-books, and more particularly, to a system and method that executes an e-book reading application in an electronic device with a touch screen, via a touch gesture.

### DESCRIPTION OF THE RELATED ART

An electronic book (e-book) refers to a book-length publication in digital form, including text, images, etc. that can be read by a user on a display screen in place of the user reading a printed book. Users can easily purchase and read e-books via electronic devices with an e-book reader function, such as a tablet PC, etc., anywhere and anytime they want. E-books are cheaper than printed books. This has led to an increase in the number of e-book users.

Some electronic devices may be equipped with touch screens and an e-book reading function. Users of such electronic devices can turn over the pages of an e-book on the touch screen by operating the touch screen in order to read the e-book. If the electronic device senses a user's touch gesture for turning over a page of an e-book on the touch screen, the e-book turns over the current page and displays the next page. It will be appreciated that phrase "turning over a page" derives from the physical action of a user reading a printed book. The equivalent action for an e-book reading function is to replace the display of a current page with the display of a new page. For some e-book reading applications there may be a display transition between the current and the new page to simulate or give a similar impression to physically turning a page.

Conventional electronic devices for reading e-books are disadvantageous in that the user cannot easily jump to a specific page in an e-book, e.g., a page where a note, highlight or bookmark has previously been input by the user or another user, or otherwise stored in association with that page. For example, if a user needs to jump to a specific page in an e-book, he/she must use a menu or a scroll bar in the conventional electronic device. This is because conventional electronic devices don't allow for touch gestures to navigate the pages of an e-book in a variety of modes.

### SUMMARY OF THE INVENTION

The invention has been made in view of the above problems. It is an aim of certain embodiments of the invention to solve, mitigate or obviate, at least partly, at least one of the problems and/or disadvantages associated with the prior art. Certain embodiments aim to provide at least one of the advantages described below.

Particular embodiments of the present invention provide a system and method that allow a user to navigate to a page in an e-book in an electronic device, via touch gestures.

In accordance with a first aspect of the present invention, there is provided a method for executing an e-book reading application in an electronic device with a touch screen, the method comprising: sensing a touch gesture while a first page of an e-book is displayed; determining whether the sensed touch gesture corresponds to a touch gesture to turn over pages of the e-book; identifying, if the sensed touch gesture corresponds to a touch gesture to turn over pages of the e-book, a second page to be turned to according to the touch gesture; and displaying the second page.

In accordance with a second aspect of the present invention, there is provided a system for executing an e-book reading application in an electronic device, the system comprising: a touch screen arranged to sense a touch gesture; a storage unit arranged to store a look up table, LUT; a controller arranged to receive an input indicated of the sensed touch gesture from the touch screen while controlling the display of a first page of an e-book, to determine whether the input is indicative of a touch gesture to turn over pages of the e-book by referring to the LUT, and to identify, if the input is indicative of a touch gesture corresponding to a touch gesture to turn over pages of the e-book, a second page to be turned to according to the input; and a display unit arranged to display the second page.

Another aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

The features and advantages of the invention will become more apparent from the following detailed description in conjunction with the accompanying drawings, in which:
FIG. 1 illustrates a schematic block diagram of a mobile device according to an exemplary embodiment of the present invention;
FIG. 2 illustrates a detailed view of an e-book application executing unit in the controller shown in FIG. 1;
FIG. 3 illustrates a flow chart that describes a method for executing an e-book reading application in a mobile device, according to the exemplary embodiment of the present invention;
FIGS. 4A and 4B illustrate a flow chart that describes a method for executing an e-book reading application in a mobile device, according to another exemplary embodiment of the present invention;
FIGS. 5A to 7 illustrate screens to describe a method for turning over pages, according to the exemplary embodiment of the present invention; and
FIGS. 8A to 13 illustrate screens to describe another method for turning over pages using a temporary bookmark, according to the exemplary embodiment of the present invention.

### DETAILED DESCRIPTION OF THE INVENTION

Hereinafter, preferred embodiments of the system and method for executing an e-book reading application, according to the present invention, are described in detail herein below with reference to the accompanying drawings. The same reference numbers are used throughout the drawings to refer to the same or like parts. The terms or words described in the present description and the claims should not be limited by a general or lexical meaning, instead should be analyzed as a meaning and a concept through which the inventor defines and describes the invention at his most effort, to comply with the idea of the invention. Also, terms described herein, which are defined considering the functions of the present invention, may be implemented differently depending on user and operator's intention and practice. Therefore, one skilled in the art will understand that the exemplary embodiments disclosed in the description and configurations illustrated in the drawings are only preferred embodiments, instead there may be various modifications, alterations, and equivalents thereof to replace the exemplary embodiments at the time of filing this application. Although the drawings represent an embodiment of the invention, the drawings are not necessarily to scale and certain features may be exaggerated or omitted in order to better illustrate and explain the invention. Therefore, it should be understood that the invention is not limited to the exemplary embodiments.

The e-book reading application executing system and method according to the present invention can be applied to a variety of electronic devices with an e-book reader function, e.g., mobile devices such as smart phones, tablet PCs, etc. The following embodiments will be described based on mobile devices to which the e-book reading application executing system and method are applied.

The e-book reading application executing system and method support a variety of functions: for example, for sensing touch gestures while an e-book is displayed, for identifying a specific page to open according to a sensed touch gesture, for displaying the identified page, for setting a temporary bookmark on a currently displayed page, for returning to a page with a temporary bookmark from any page, etc. The features of the present invention will be described in detail referring to the accompanying drawings. However, a detailed description of known functions and configurations incorporated herein may be omitted to avoid unnecessarily obscuring the subject matter of the invention.

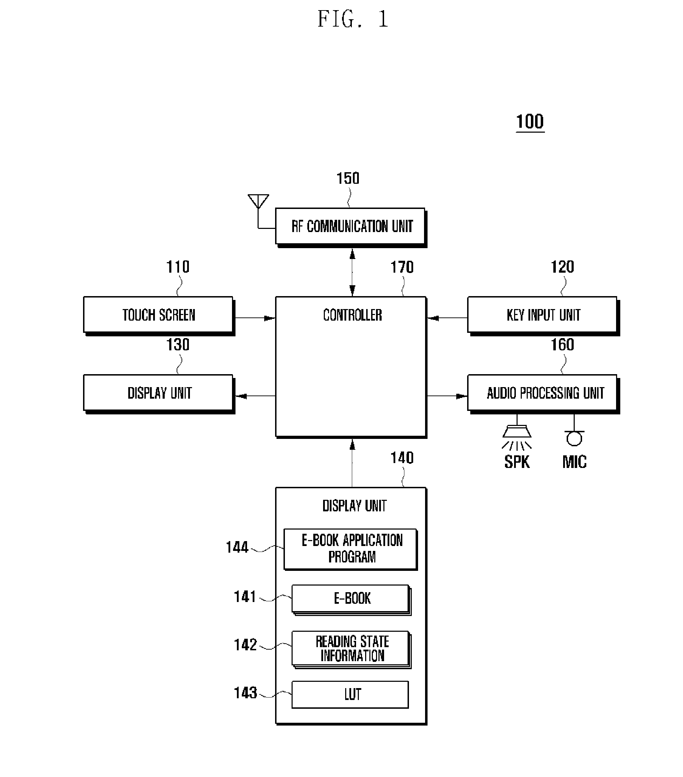

FIG. 1 illustrates a schematic block diagram of a mobile device 100 according to an exemplary embodiment of the present invention. The mobile device 100 includes a touch screen 110, a key input unit 120, a display unit 130, a storage unit 140, an RF communication unit 150, an audio processing unit 160, a speaker (SPK), a microphone (MIC), and a controller 170.

The touch screen 110 is installed onto or in the display unit 130. The touch screen 110 senses a user's touch gestures, creates corresponding signals for events associated with the touch gestures, and transfers the corresponding signals to the controller 170. The controller 170 identifies touch gestures according to the received signals, and performs corresponding control operations. Examples of the touch gestures may include a touch, tap, double tap, press, drag, drag and drop, sweep, etc. 'Touch' refers to a gesture that presses one point on the touch screen 110. It will be appreciated that "one point on the touch screen" may in practice refer to a small area of the touch screen, depending upon the size of the object used to touch the touch screen. Additionally, while there may be slight movement of the touch point during a touch gesture, if the release point of the touch gesture has not moved significantly then the touch gesture may be determined to have been applied to a single point. 'Tap' refers to a gesture that strikes gently on one point on the touch screen 110, i.e., a drop gesture. 'Double tap' refers to a gesture that taps twice on one point on the touch screen 110 in quick succession. 'Press' refers to a gesture that contacts one point on the touch screen 110 for longer than the 'tap' gesture and then releases the one point. 'Drag' refers to a gesture that touches one point on the touch screen 110 and then moves to another location without removing the touch. 'Drag' is also called 'scroll.' 'Drag and drop' refers to a gesture that selects a virtual object by grabbing the objected displayed on the touch screen 110, and dragging the object to a different location or onto another virtual object. 'Sweep' refers to a gesture that brushes lightly on the touch screen 110 with the user's finger or a component, such as a stylus. 'Sweep' is also called 'flick.' The controller 170 can distinguish 'drag' and 'sweep' via the speed of moving a corresponding object on the touch screen 110. The touch screen 110 may be implemented with various types of sensors, such as a resistive type, a capacitive type, an electromagnetic induction type, a pressure type, etc.

The key input unit 120 includes a number of input keys and function keys that receive numbers and letters, as well as other symbols, and that set a variety of functions in the mobile device 100. The function keys include direction keys, side keys, shortcut keys, etc., which are set to perform specific functions. The key input unit 120 creates key signals, related to a user's settings and function controls of the mobile device 100, and transfers the key signals to the controller 170. Examples of the key signals are turning on/off the mobile device 100, adjusting a volume of the speaker SPK, turning on/off the screen, etc. The controller 170 controls corresponding components according to the key signals. The key input unit 120 may be implemented with a QWERTY keypad, a 3x4 keypad, a 4x3 keypad, etc., which includes a number of keys. When the mobile device 100 is designed to include a full touch screen, the key input unit 120 may be implemented as side keys for turning on/off the touch screen 110 or the mobile device 100, which are installed to the side of the case of the mobile device 100.

The display unit 130 converts video data from the controller 170 into analog signals, and displays the corresponding video. The display unit 130 displays a variety of screens according to the control of the controller 170, e.g., a lock screen, a home screen, an application execution screen, a menu screen, a message writing screen, an Internet screen, a keypad screen, etc. The display unit 130 also displays an e-book application execution screen under the control of the controller 170. The lock screen refers to an initial screen displayed when the display unit 130 is turned on and put into a locked state. When a touch event for unlocking the locked mobile device occurs, the controller 170 unlocks the mobile device 100 and switches the lock screen to a home screen or an application execution screen. The home screen refers to a screen showing a number of icons corresponding to respective applications. If the user selects one of the icons, the controller 170 executes the corresponding application and displays the application execution screen on the display unit 130. The display unit 130 may divide the screen into a number of areas and display corresponding screen images in the divided areas under the control of the controller 170. For example, the display unit 130 may divide the entire area into first and second sub-areas, and display an application execution screen in the first sub-area and a keypad screen in the second sub-area.

The display unit 130 may be implemented with a flat display panel, such as a Liquid Crystal Display (LCD), an Organic Light Emitting Diode (OLED), an Active Matrix Organic Light Emitting Diodes (AMOLED), or the like. The display unit 130 may be implemented with an autostereoscopic display that allows the user to see a left-eye viewing image and a right eye viewing image, thereby providing binocular depth perception. To this end, the display unit 130 includes a 3-dimension implementing unit. 3D vision techniques are divided into 3D with glasses and 3D without glasses. 3D with glasses is implemented with a color filter method, a polarizer filter method, and a shutter glasses method. 3D without glasses is implemented with a lenticular lens and a parallax barrier.

The storage unit 140 stores an operating system (OS) for booting the mobile device 100, application programs required to operate the functions related to the present invention, and data generated when the mobile device 100 is operated. The storage unit 140 includes a program storage area and a data storage area.

The data storage area stores data that the controller 170 creates while the mobile device 100 is operated. The data storage area also stores screens to be displayed on the display unit 130, e.g., keypad screens, menu screens, etc. Examples of the keypad screens may be a 3x4 keypad, a QWERTY keypad, etc. Examples of the menu screens may include a key for switching screens (e.g., a return key for returning back from a current screen to the previous screen, etc.), a key for controlling applications that are currently executed, etc. The keypad screen or menu screen may be displayed, superimposing on a lock screen, an application execution screen, a home screen, etc. The data storage area may serve as a buffer that temporarily stores data according to a copy and paste command, such as messages, images or photographs, web pages, documents, etc. The data storage area stores the setting values for the functions of the mobile device 100, e.g., a screen brightness value, a setting for whether vibration is created according to touches, an automatic screen rotation function, etc.

As shown in FIG. 1, the data storage area stores a number of e-books 141. The data storage area also stores the reading state information 142 regarding the respective e-books 141. The reading state information 142 includes a user's read page, read date, the number of pages to be read, a user's input information, etc. The user's input information refers to information that the user inputs to a page or stores in association with a page. The user's input information may be displayed on the page when the page is opened. Examples of the user's input information may be a note, a highlight, an image, a bookmark, etc. The data storage area also stores a look up table (LUT) 143 that the controller 170 refers to in order to turn over pages of an e-book and to determine whether a page is read. The following table 1 is an example of the LUT 143.

**TABLE 1**

| Types | Turn over pages via flick, tap or drag | Turn over pages via scroll bar | Turn over pages via multi-touch gestures | Jump to contents screen | Jump to my note screen | Jump to reading plan screen |
|---|---|---|---|---|---|---|
| Read | O | X | X | X | X | X |

Referring to the LUT 143, the controller 170 determines whether the user read a page of an e-book based on the types of page turning-over operations. When a user turns over pages of an e-book one by one from a current page to the previous page or the next page, the controller 170 ascertains that he/she read the current page. On the contrary, when a user turns over pages of an e-book, jumping from a current page to a certain page other than the next or previous page, the controller 170 ascertains that he/she didn't read the current page. For example, if the controller 170 detects a flick or drag gesture on the current page of an e-book, by referring to the LUT 143, the controller 170 recognizes that the user read the current page and controls the display unit 130 to display the next or previous page. After that, the controller 170 updates the reading state information 142 by recognizing that the current page has been read. If the controller 170 detects a tap gesture on either side of the current page, i.e., the right or left edges, the controller 170 recognizes that the user has read the current page. When the controller 170 identifies that pages of an e-book are turned over one by one via a scroll bar, the controller 170 recognizes that the user has not read the pages. The scroll bar may be displayed, superimposed on the current page, with a range of sizes corresponding to the entire page of the e-book. The user can turn over pages of an e-book or jump to a certain page by operating the scroll bar. The scroll bar may include location information regarding a current page, pages the user has read, and pages the user is planning to read.

If the controller 170 detects a multi-touch gesture, the controller 170 jumps from a current page of an e-book to a certain page. A multi-touch gesture refers to a gesture that simultaneously touches a number of points on the touch screen. For example, if the controller 170 simultaneously detects a flick or drag on two points (that is, a double flick or double drag), the controller 170 may jump from a current page to the following or previous start of a chapter, for instance the first page of the next chapter and display the first page of the next chapter on the display unit 130. When the current page is part way through a chapter the previous start of a chapter may comprise the start of the current chapter. When the current page is the first page of a chapter the previous start of a chapter may comprise the start of the previous chapter. Likewise, if the controller 170 simultaneously detects a flick or drag on three points (that is a triple flick or triple drag), the controller 170 may jump from a current page to a page closest thereto where the user's input information is inserted. The direction of the flick or drag within the touch screen may determine the direction in which the controller 170 searches for a page having inserted input information, or the following or previous start of a chapter. When the user jumps from a page of an e-book to a specific page via a multi-touch gesture, the controller 170 may recognize that he/she is not reading the e-book. Likewise, when the user jumps from a page of an e-book to a content screen, a "My Note" screen, or a reading plan screen, the controller 170 may recognize that he/she is not reading the e-book. A "My note" screen refers to a screen that collectively displays the user's input information. If the controller 170 detects a touch regarding a user's input information on the My Note Screen or a tap on a note, the controller 170 displays a page corresponding to the note.

The program storage area stores an operating system (OS) for booting the mobile device 100 and controlling the entire operation of the components in the mobile device 100. The program storage area also stores application programs for optional functions, e.g., a web browser function, an audio file playback function such as MP3 files, an image/video playback function, etc. The program storage area also stores an e-book application 144. The e-book application 144 includes a number of routines: for example, for sensing touch gestures while executing the e-book reading function, for detecting whether pages of e-book are turned over, for turning over pages of e-book, for setting a temporary bookmark, etc.

The RF communication unit 150 establishes communication channels for a voice/video call, or data communication such as video or messages, with other communication systems, under the control of the controller 170. To this end, the RF communication unit 150 includes an RF transmitter for up-converting the frequency of signals to be transmitted and amplifying the signals and an RF receiver for low-noise amplifying received RF signals and down-converting the frequency of the received RF signals. The RF communication unit 150 includes a mobile communication module (e.g., a 3-Generation (3G) mobile communication module, a 3.5G module, a 4G module, etc.), a short-range communication module (e.g., a Wi-Fi module), a digital broadcasting module (e.g., a DMB module), etc.

The audio processing unit 160 transfers audio signals, output from the controller 190, to the speaker (SPK). The audio processing unit 160 also transfers audio signals such as voices, input via the microphone (MIC), to the controller 170. The audio processing unit 160 converts voice/audio data into audible signals and then outputs the audible signals via the speaker SPK, according to the control of the controller 170. The audio processing unit 160 also converts audio signals such as voices, received via the microphone MIC, into digital signals and then transfers the digital signals to the controller 170.

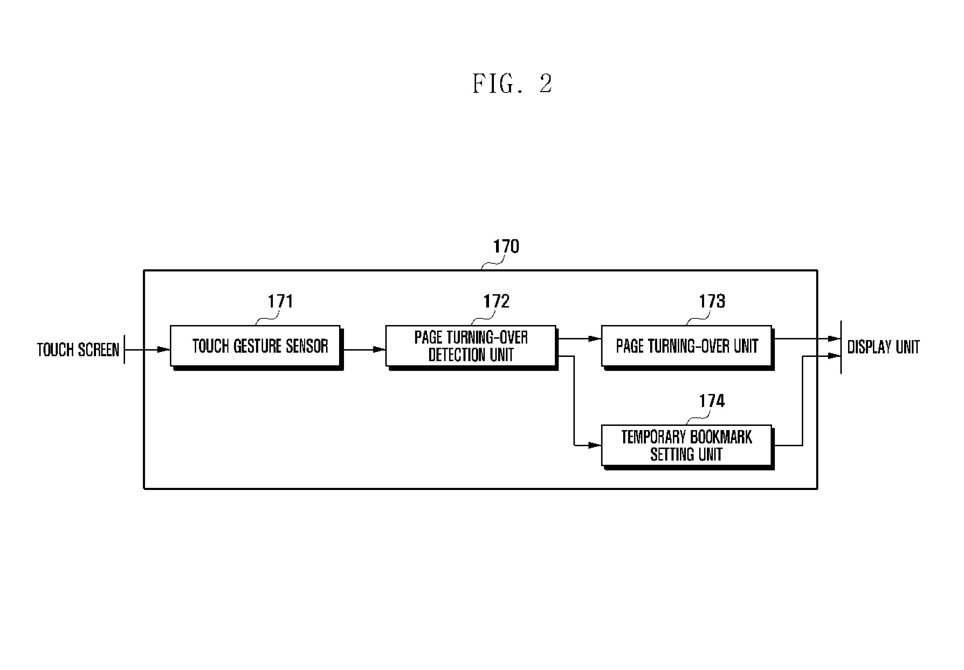

The controller 170 controls the entire operation of the mobile device 100 and the signals flowing among the components therein. The controller 170 processes data and executes applications. The controller 170 also controls the electric power supplied to the components from a battery or other power source. The controller 170 executes the application programs stored in the program storage area. In particular, the controller 170 includes an e-book application executing unit as shown in FIG. 2.

FIG. 2 illustrates a detailed view of the e-book application executing unit in the controller 170 shown in FIG. 1. The e-book application executing unit may be installed within or separated from the controller 170. In the following description, it is assumed that the e-book application executing unit is installed within the controller 170. Referring to FIG. 2, the e-book application executing unit includes a touch gesture sensor 171, a page turning-over detection unit 172, a page turning-over unit 173 and a temporary bookmark setting unit 174. The touch gesture sensor 171 is connected to the touch screen 110 and senses touch gestures during the reading operation.

The page turning-over detection unit 172 determines whether a detected touch gesture corresponds to a predetermined or stored touch gesture for turning over pages of an e-book, by referring to the LUT 143. When the page turning-over detection unit 172 ascertains that the detected touch gesture corresponds to a gesture for turning over pages of an e-book, the page turning-over unit 172 sets a page to be jumped to according to the detected touch gesture. When a multi-touch gesture is detected, the page turning-over detection unit 172 sets the first page of the next chapter or a page including a user's input information, as a page to be jumped to. The page turning-over detection unit 172 determines whether a turning-over operation corresponds to a reading operation, referring to the LUT 143. When the page turning-over detection unit 172 ascertains that a turning-over operation corresponds to a reading operation, the page turning-over detection unit 172 sets a page as a read page. In that case, the page turning-over detection unit 172 updates the reading state information 142 by reflecting the information regarding the read page.

The page turning-over unit 173 controls the display unit 130 to display the set page. The page turning-over unit 173 loads the set page from the storage unit 140 and displays the set page on the display unit 130.

When the page turning-over detection unit 172 ascertains that the detected touch gesture corresponds instead to a gesture for setting a temporary bookmark, the temporary bookmark setting unit 174 inserts a temporary bookmark in the page currently displayed on the display unit 130. That is, the temporary bookmark setting unit 174 controls the display unit 130 to display a temporary bookmark. Bookmark information may also be stored in association with the page. While other pages, other than a page with a temporary bookmark, are displayed, an indicator for indicating the page with the temporary bookmark may also be displayed. The indicator may be a shape showing a part of the temporary bookmark. The display unit 130 may always display the indicator under the control of the page turning-over unit 173. When the detected touch gesture corresponds to a gesture for selecting the indicator, the page turning-over detection unit 172 sets the page with the temporary bookmark as a page to be jumped to. After that, the page turning-over unit 173 turns over the current page to the page with the temporary bookmark. The page turning-over unit 173 may also release the setting of a temporary bookmark. That is, if the user selects a temporary bookmark, the page turning-over unit 173 removes the temporary bookmark from the page. Alternatively, the e-book application environment may be set in such a way that a temporary bookmark may be automatically removed when the e-book application is terminated. In an alternative embodiment, a temporary bookmark may not be included in a user's input information. That is, a page with a temporary bookmark may not be operated via a multi-touch gesture.

Although it is not shown in the drawings, the mobile device 100 may selectively further include various types of components, for example: a camera module, a GPS module, a sensor module for sensing the states and locations of the mobile device 100, an interface module for connecting to external devices in a wireless or wired mode, etc. The sensor module can sense the orientation of the mobile device 100 in portrait or landscape mode. To this end, the sensor module may be implemented with an acceleration sensor, a gravity sensor, etc. With the spread of digital convergence, although it is impossible to list all the modifications of mobile devices in this description, it will be easily appreciated by those skilled in the art that the other components equivalent to the above-listed components, or any other known components providing known functions to the mobile device 100, may be further included in the mobile device 100 according to the present invention. Also, it will be appreciated that, according to the purposes and intended functions of the mobile device 100, the mobile device 100 may be implemented by omitting a particular component or replacing the particular component with other components.

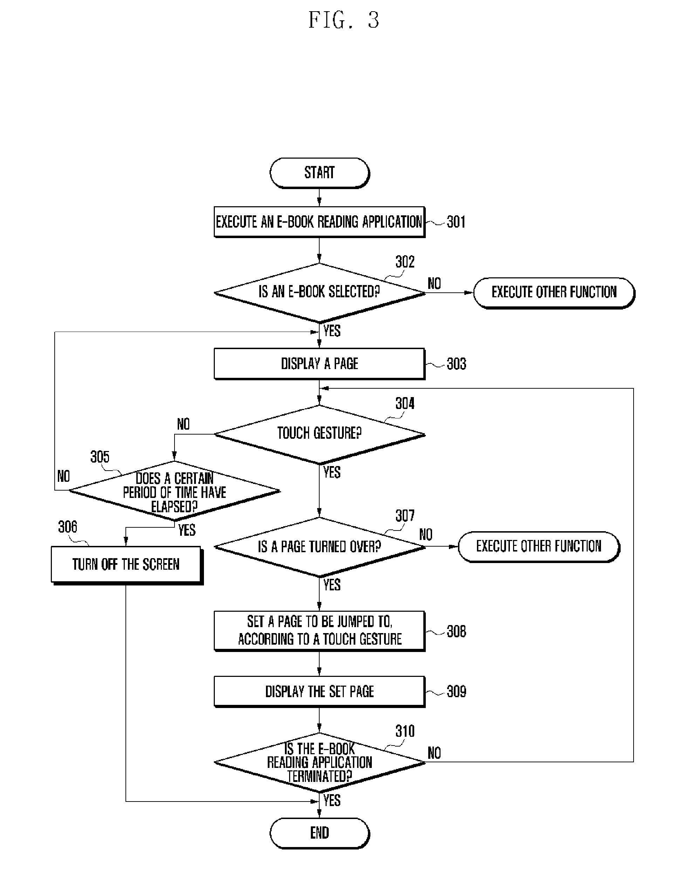

FIG. 3 illustrates a flow chart that describes a method for executing an e-book reading application in the mobile device 100, according to the exemplary embodiment of the present invention. Referring to FIG. 3, when the controller 170 detects a touch gesture for executing the e-book application 144 while the mobile device 100 is idle, the controller 170 executes the application 144 and displays a bookshelf screen showing icons corresponding to e-books in step 301. The controller 170 determines whether a touch gesture is input to select one of the e-book icons in step 302. When the controller 170 ascertains that a touch gesture is input to select one of the e-book icons at step 302, the controller 170 loads a page of the selected e-book from the storage unit 140 and displays the loaded page on the display unit 130 in step 303. The displayed page may be the page of contents of the e-book, the first page, or a page that was previously displayed. The controller 170 may also display reading state information 142 regarding an e-book as well as a corresponding page. The reading state information 142 may be displayed as a scroll bar to show the pages of the e-book that the user read, with respect to the entire page. When the controller 170 detects a tap on the center of the screen while displaying a corresponding page, the controller 170 may also display the reading state information 142, superimposed on the displayed page. Referring back to step 302, if the controller 170 ascertains that a touch gesture does not correspond to a gesture to select one of the e-book icons, e.g., to show a My Note screen, at step 302, the controller 170 proceeds to execute another function of the mobile device 100, such as displaying a different screen such as an application screen for the other function.

After step 303, the controller 170 determines whether a touch gesture is input while displaying the selected page in step 304. When the controller 170 ascertains that a touch gesture is not input at step 304, the controller 170 further determines whether a preset period of time has elapsed in step 305. In an exemplary embodiment, the preset period of time is an interval set to automatically turn off the touch screen 110. If the controller 170 does not detect any touch gestures until the preset period of time has elapsed from the time point that the touch gesture was input to select an e-book at step 305, the controller 170 turns off the touch screen 110 in step 306 and the method ends. However, if the controller 170 detects a touch gesture in step 305 before the preset period of time has elapsed, the method loops back to step 303. Referring back to step 304, if the controller 170 ascertains that a touch gesture is input at step 304, the controller 170 determines whether the touch gesture corresponds to a gesture to turn over pages of the e-book in step 307. When the controller 170 ascertains that the touch gesture does not correspond to a gesture to turn over pages of the e-book at step 307, the controller 170 performs or executes another function. On the contrary, when the controller 170 ascertains that the touch gesture corresponds to a gesture to turn over pages of the e-book at step 307, the controller 170 sets a page to be turned over according to the touch gesture in step 308 and displays the set page on the touch screen 110 in step 309 by identifying the type of the touch gesture to turn over pages. After that, the controller 170 determines whether a command is input to terminate the e-book application 144 in step 310. When the controller 170 ascertains that a command is not input to terminate the e-book application 144 at step 310, the controller 170 returns to and proceeds with step 304. Otherwise, a termination command has been input at step 310, and the method ends.

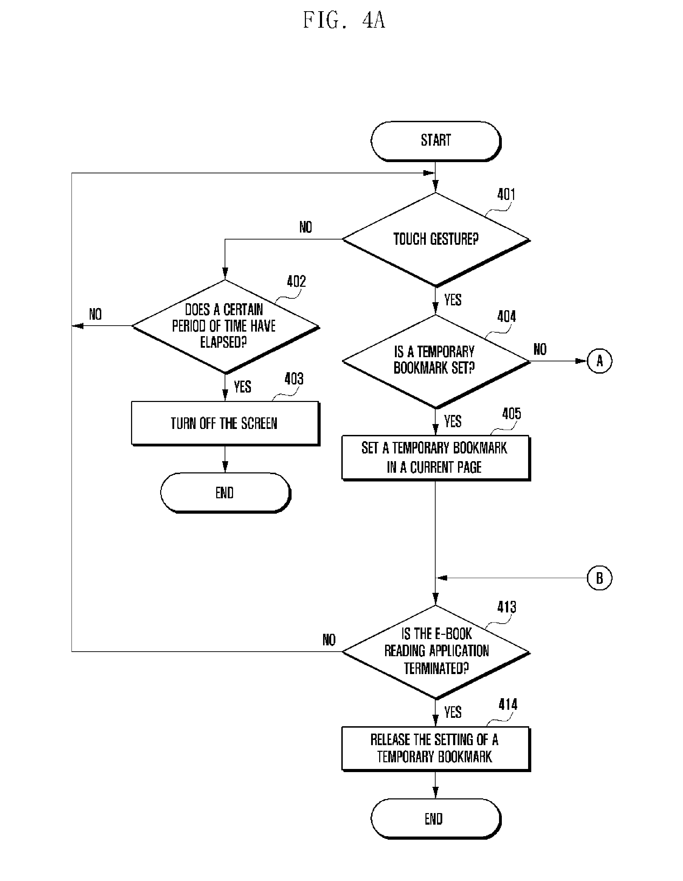

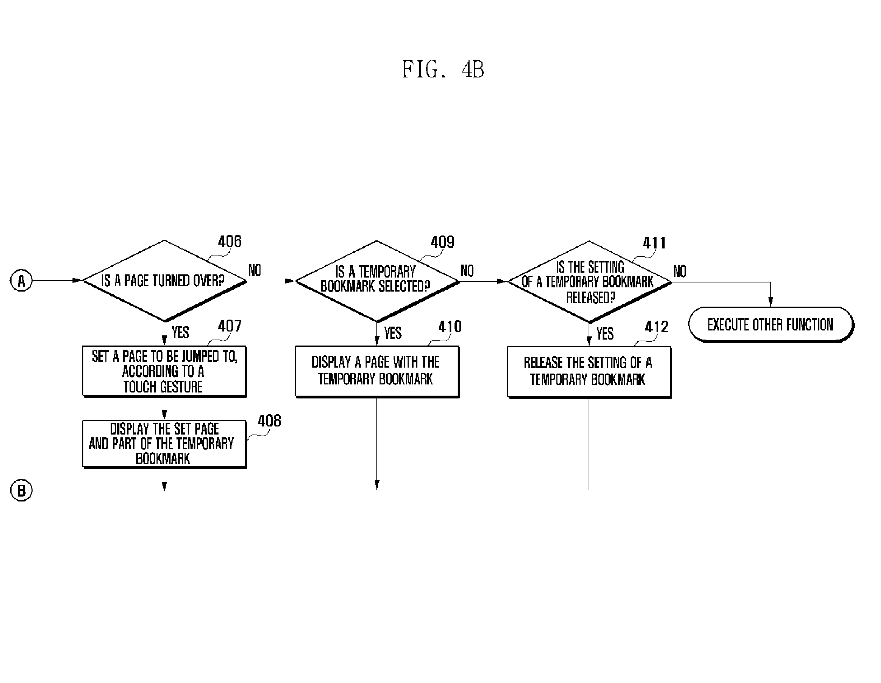

FIGS. 4A and 4B illustrate a flow chart that describes a method for executing an e-book reading application in the mobile device 100, according to another exemplary embodiment of the present invention. Referring to FIGS. 4A-4B, the controller 170 determines whether a touch event occurs while a page of an e-book is displayed in step 401. When the controller 170 ascertains that a touch event does not occur at step 401, the controller 170 further determines whether a preset period of time has elapsed in step 402. If the controller 170 does not detect any touch gestures until the preset period of time has elapsed from the time point that the touch event occurred at step 402, the controller 170 turns off the touch screen 110 in step 403 and the method ends. On the contrary, if the controller 170 ascertains that the preset period of time has not elapsed while waiting for a touch gesture at step 402, the controller 170 returns to step 401.

Referring back to step 401, when the controller 170 ascertains that a touch event occurs at step 401, the controller 170 identifies whether the touch gesture corresponds to a gesture for setting a temporary bookmark in step 404. If the controller 170 ascertains that the touch gesture corresponds to a gesture for setting a temporary bookmark at step 404, the controller 170 sets a temporary bookmark in the currently displayed page in step 405 and proceeds to step 413, as described herein.

On the contrary, if the controller 170 ascertains that the touch gesture does not correspond to a gesture for setting a temporary bookmark at step 404, the controller 170 determines whether the touch gesture corresponds to a gesture to turn over pages of an e-book 406 in FIG. 4B. If the controller 170 ascertains that the touch gesture corresponds to a gesture to turn over pages of an e-book at step 406, the controller 170 sets a page to be jumped to according to the touch gesture in step 407, and displays the set page in step 408. In addition, if a temporary bookmark has already been set, the controller 170 also displays a part of the temporary bookmark as well as the set page at step 408. The method then proceeds to step 413 in FIG. 4A.

On the contrary, if the controller 170 ascertains that the touch gesture does not correspond to a gesture to turn over pages of an e-book while displaying the other pages without a temporary bookmark at step 406, the controller 170 determines whether the touch gesture corresponds to a gesture to select a temporary bookmark in step 409. If the controller 170 ascertains that the touch gesture corresponds to a gesture to select a temporary bookmark at step 409, the controller 170 displays a page with a temporary bookmark in step 410. The method then proceeds to step 413 in FIG. 4A.

On the contrary, if the controller 170 ascertains that the touch gesture does not correspond to a gesture to select a temporary bookmark while displaying a page with a temporary bookmark at step 409, the controller 170 determines whether the touch gesture corresponds to a gesture to release the setting of the temporary bookmark in step 411. If the controller 170 ascertains that the touch gesture corresponds to a gesture to release the setting of the temporary bookmark at step 411, the controller 170 releases the setting of the temporary bookmark in step 412. The method then proceeds to step 413 in FIG. 4A. On the contrary, if the controller 170 ascertains that the touch gesture does not correspond to a gesture to release the setting at step 411, the controller 170 performs or executes another function.

After performing steps 405, 408, 410, or 412, the controller 170 determines whether a command is input to terminate the e-book application in step 413. If the controller 170 ascertains that a command is not input to terminate the e-book application at step 413, the controller 170 returns to step 401. On the contrary, if the controller 170 ascertains that a command is input to terminate the e-book application at step 413, the controller 170 terminates the application in step 414. In addition, if a temporary bookmark has been set, the controller 170 may also release the setting of the bookmark.

The system and method for executing an e-book reading application are described in detail referring to the accompanying drawings.

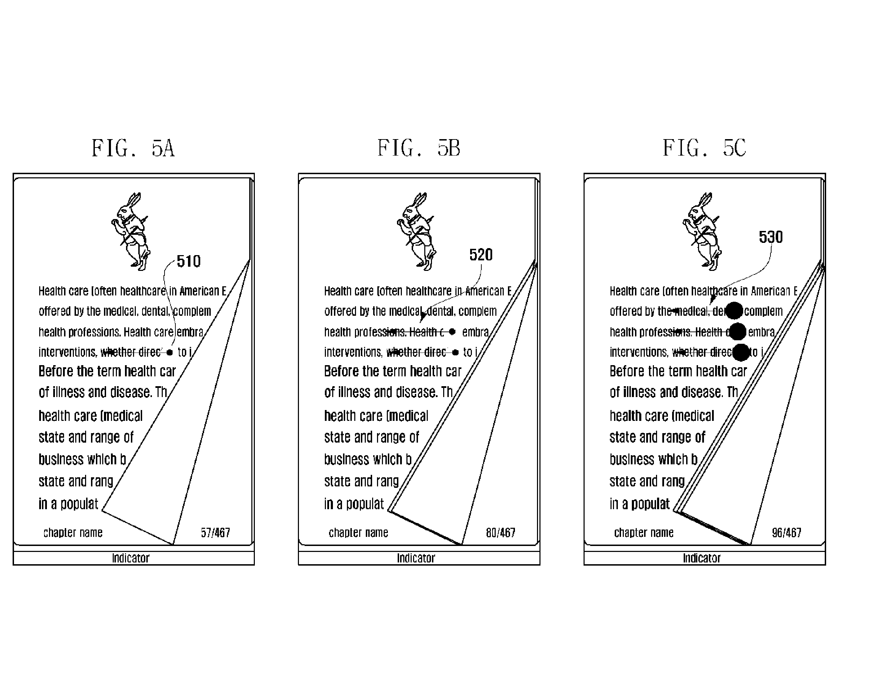

FIGS. 5A to 7 illustrate screens to describe a method for turning over pages, according to the exemplary embodiment of the present invention.

Referring to FIGS. 5A-5C, for the sake of convenience, a flick gesture 510 may be set to turn over pages of an e-book by a unit of a page, as shown in FIG. 5A. In that case, if the controller 170 detects the flick gesture 510, the controller 170 turns over the current page in the flicking direction and displays the next page on the screen, as shown in FIG. 5B. It should be understood that the operation of turning over pages may be initiated in response to the input of other gestures (e.g., a drag gesture) on the touch screen 110. Likewise, as shown in FIG. 5B, a double flick 520 may be set to turn over pages of the e-book by a unit of a chapter. The double flick 520 is defined as a multi-touch gesture that simultaneously touches two points and moves the two touch points in the same direction on the touch screen 110. If the controller 170 detects the double flick 520, the controller 170 turns over pages of the e-book in the flicked direction and displays the first page of the next chapter, as shown in FIG. 5C. Still likewise, a triple flick 530 on the screen shown in FIG. 5C may be set to jump to a page of the e-book where a user's input information is inserted. If the controller 170 detects a triple flick 530, the controller 170 turns over pages of the e-book in the flicked direction and displays a page with a user's input information.

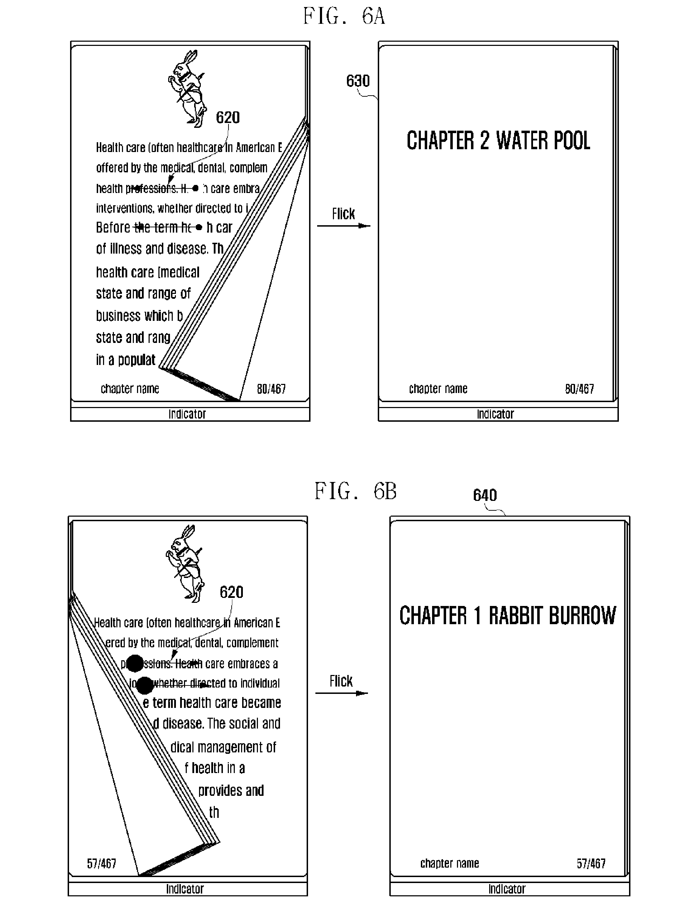

Referring to FIGS. 6A-6B, when the controller 170 detects a double flick 620 that is performed to the left, as shown in FIG. 6A, the controller 170 turns over pages of the e-book in the leftward direction and displays the first page 630 of the next chapter. Likewise, when the controller 170 detects a double flick 620 that is performed to the right, as shown in FIG. 6B, the controller 170 turns over pages of the e-book in the rightward direction and displays the first page 640 of the previous chapter.

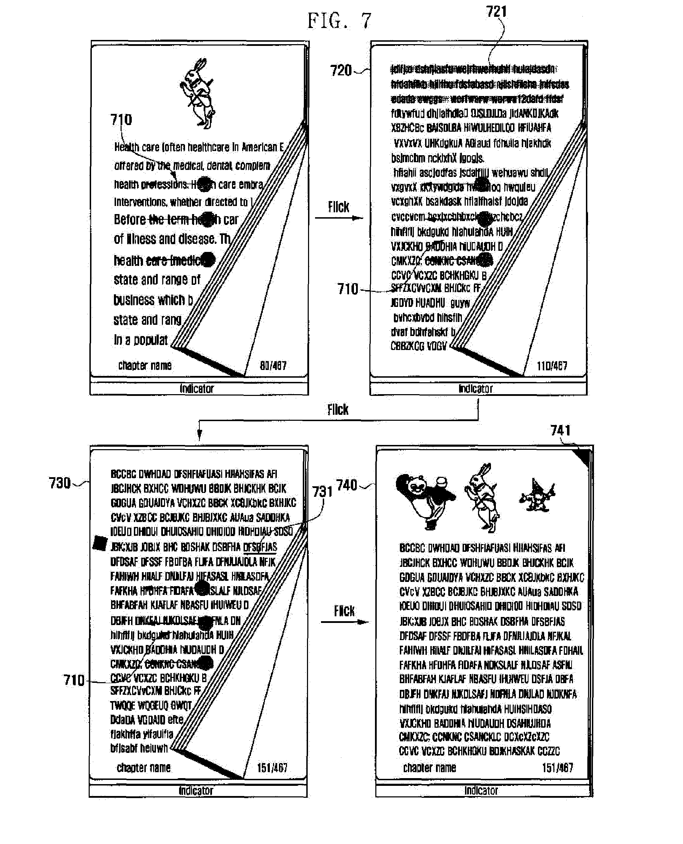

Referring to FIG. 7, when the controller 170 detects a triple flick 710 to the left, as shown in the upper left screen, the controller 170 turns over pages of the e-book in the leftward direction and displays a page 720 with a highlight 721, as shown in the upper right screen in FIG. 7. If the controller 170 detects another triple flick 710 to the left while displaying the page 720 with a highlight 721, the controller 170 turns over pages of the e-book in the leftward direction and displays a page 730 with a note 731, as shown in the screen in the lower left of FIG. 7. In the exemplary embodiment of the present invention, the note 731 may be an underlined section of text. Although it is not shown, if the user taps the note 731, the controller 170 may display a pop-up window, superimposed on the page 730. The pop-up window may show the user's input text or images, etc. In addition, if the controller 170 detects another triple flick 710 to the left while displaying the page 730 with a note 731, the controller 170 turns over pages of the e-book in the leftward direction and displays a page 740 with a bookmark 741, as shown in the screen in the lower right of FIG. 7.

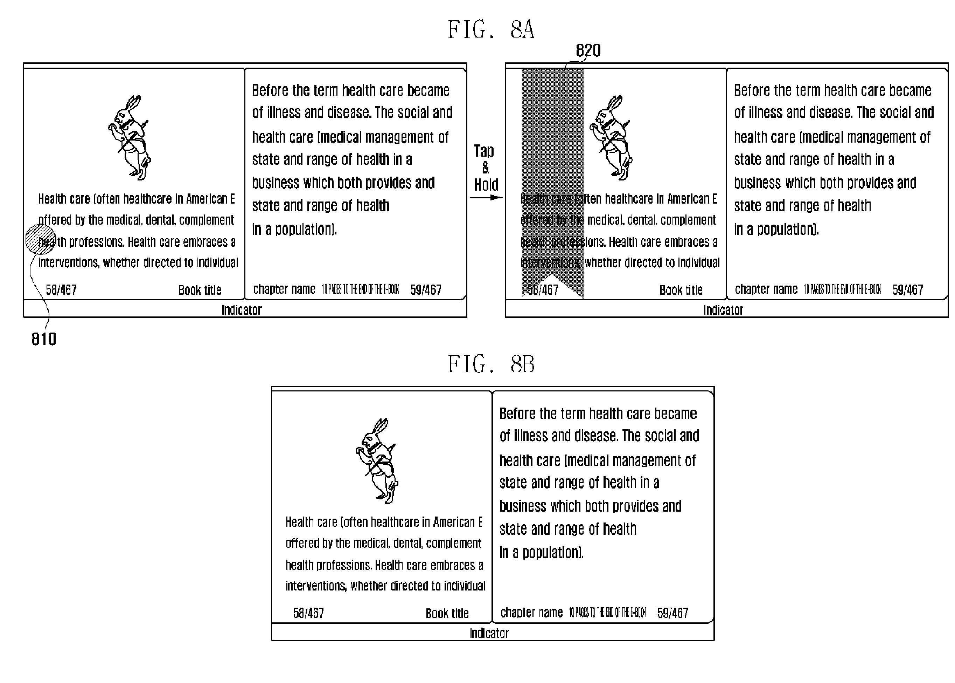

FIGS. 8A to 13 illustrate screens to describe a method for turning over pages using a temporary bookmark, according to the exemplary embodiment of the present invention.

Referring to FIGS. 8A-8B, if the controller 170 detects a long touch 810 near the right or left edge of a page of an e-book, as shown in the left screen of FIG. 8A, the controller 170 sets a temporary bookmark to the page. In that case, the display unit 130 displays a temporary bookmark image 820 close to the edge of the page, lengthwise or widthwise, and opaquely or translucently. In one embodiment, as shown in the right screen of FIG. 8A, the temporary bookmark image 820 is opaque to the text of the e-book, but is translucent to the page index, for example, the "58" in "58/467" is not obscured by the temporary bookmark image 820. In addition, as shown in FIG. 8A, the temporary bookmark image 820 extends lengthwise along the vertically oriented length of the page of the e-book. In an alternative embodiment, as shown in FIG. 8B, the temporary bookmark image extends widthwise along the horizontally oriented width of the page of the e-book. The lengthwise or widthwise orientation, and the opacity or translucency of the temporary bookmark image may be selected in customizable user settings of the mobile device 100.

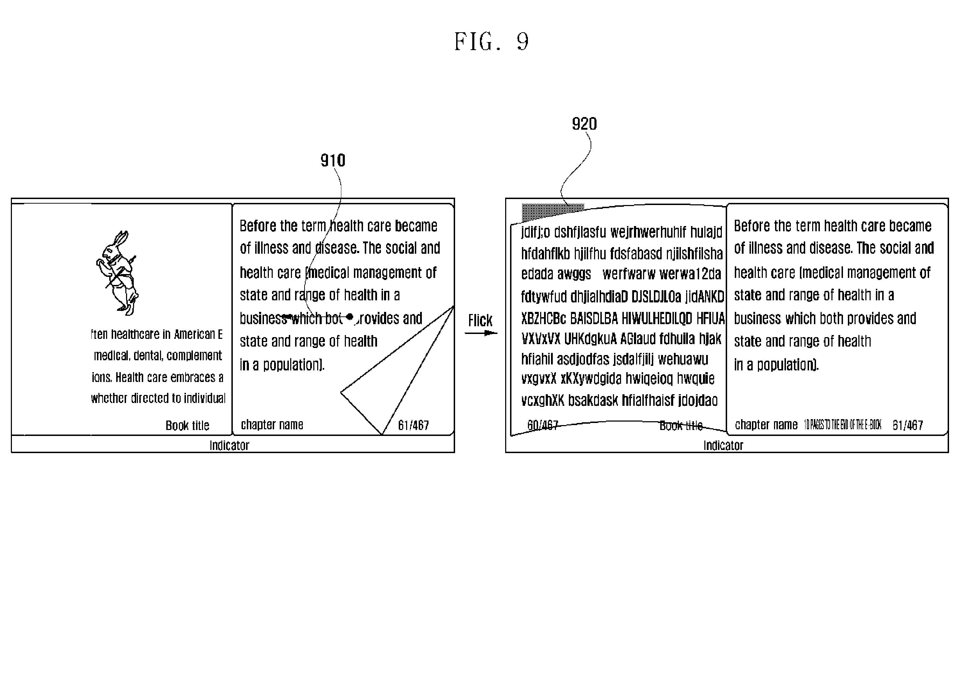

Referring to FIG. 9, if the controller 170 detects a flick 910, the controller 170 turns over a current page of the e-book and displays the next page, which then becomes the current page. If the previous page has had an indicator 920 for indicating a temporary bookmark, the controller 170 also displays the indicator 920 while displaying the current page. As shown in FIG. 9, the temporary bookmark indicator 920 may be implemented to show a part of the temporary bookmark; for example, with the left page having the appearance of a corner folded over, and the bookmark indicator 920 partially appears on the previous page.

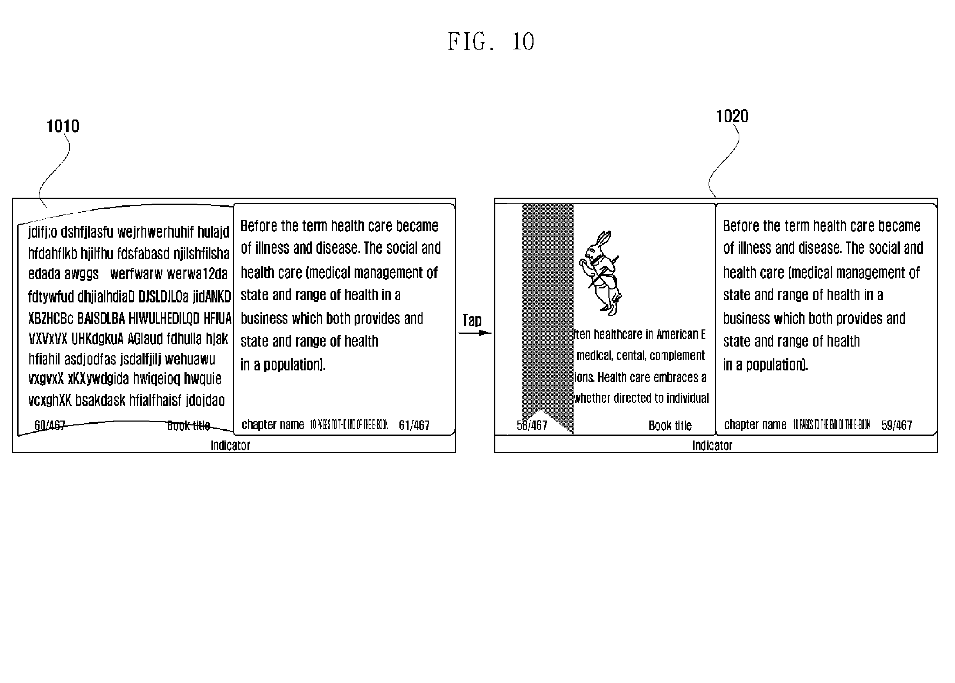

Referring to FIG. 10, when the controller 170 ascertains that the user has tapped a temporary bookmark indicator 1010 while displaying a page, the controller 170 turns over the current page, and jumps to and displays the page 1020 with the temporary bookmark.

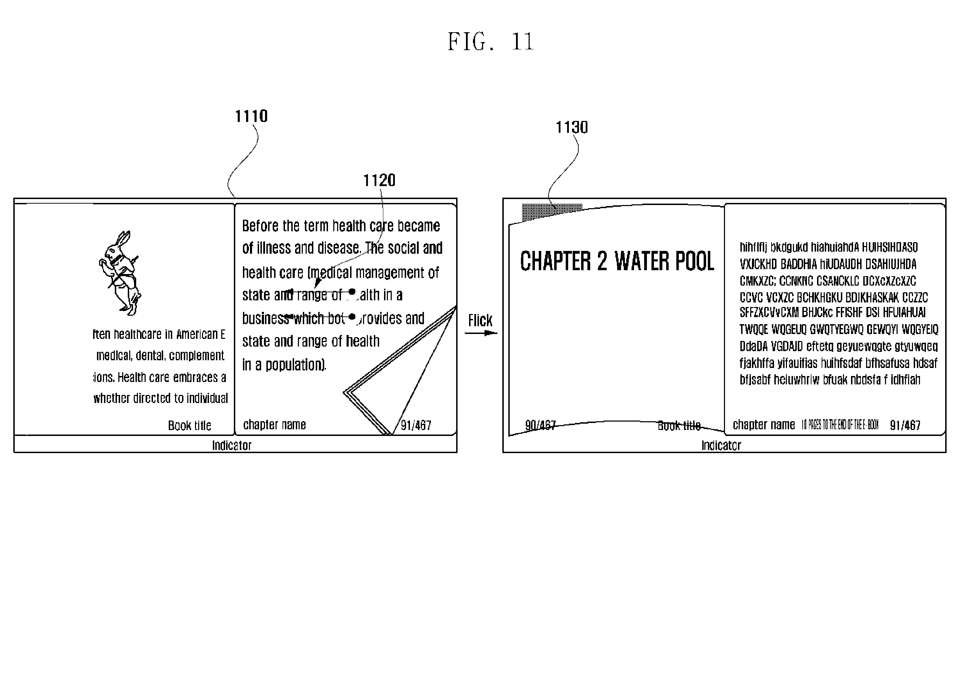

Referring to FIG. 11, if the controller 170 detects a double flick 1120 on a page while displaying a page 1110 with a temporary bookmark, the controller 170 turns over pages of the e-book and displays the first page of the next chapter. When the controller 170 ascertains that the user taps an indicator 1130 with a temporary bookmark while displaying the first page of the next chapter, the controller 170 displays the page 1110 with a temporary bookmark.

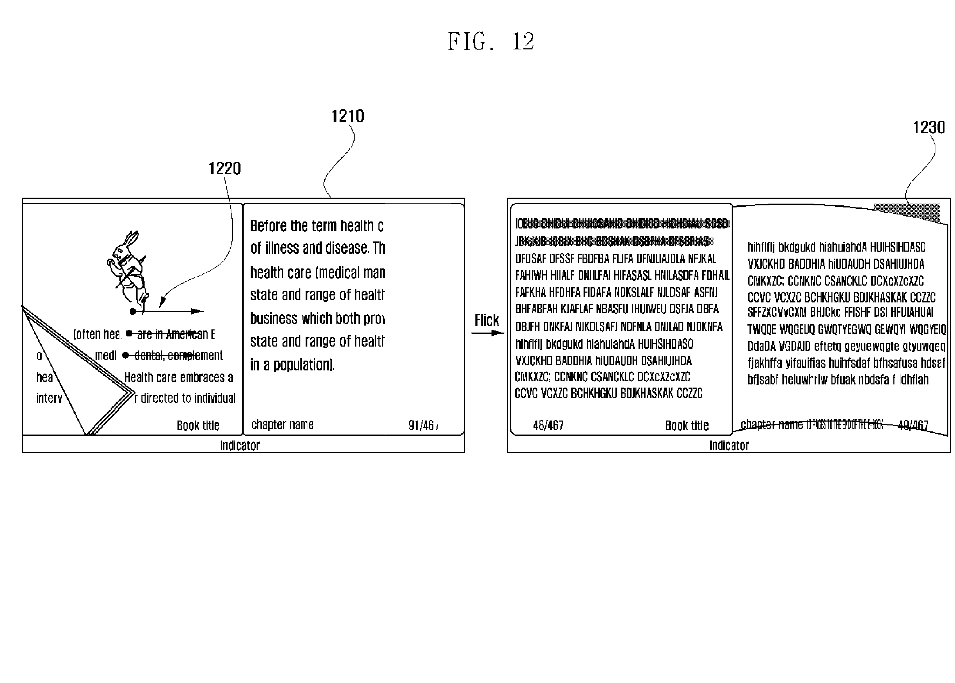

Referring to FIG. 12, if the controller 170 detects a triple flick 1220 on a page while displaying a page 1210 with a temporary bookmark, the controller 170 turns over pages of the e-book and displays a page with a user's input information, e.g., a highlight. When the controller 170 ascertains that the user taps an indicator 1230 with a temporary bookmark while displaying the page with a user's input information, the controller 170 displays the page 1210 with a temporary bookmark.

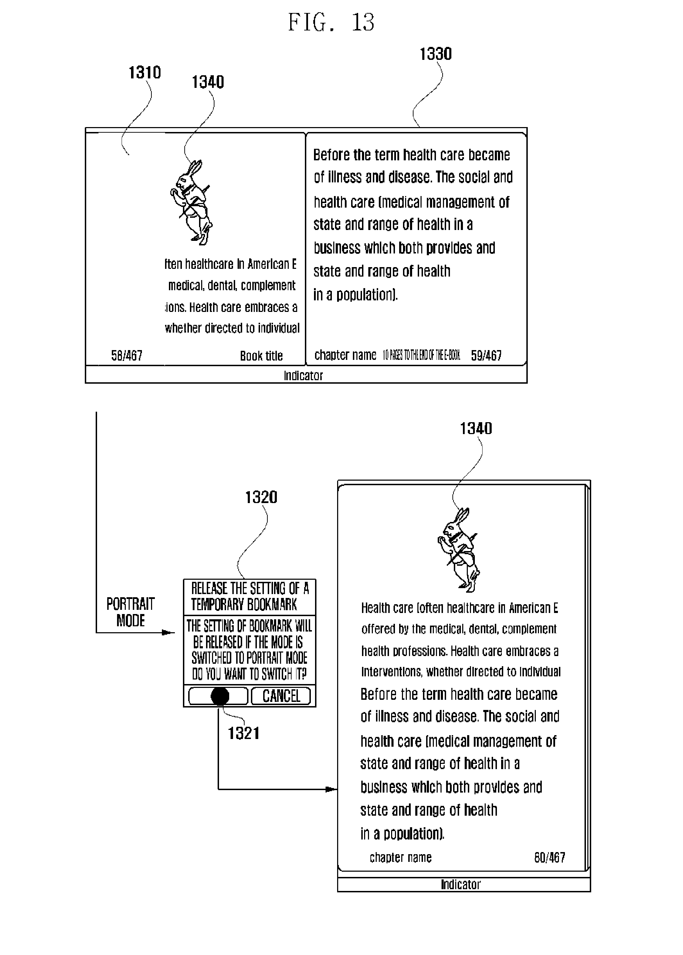

Referring to FIG. 13, the controller 170 checks the operation state of the mobile device 100 while displaying a page 1310 with a temporary bookmark. If the controller 170 ascertains that the operation mode of the mobile device 100 is altered, the controller 170 may release the setting of a temporary bookmark. For example, as shown in FIG. 13, when the mobile device 100 switches the screen 110 displaying the pages of the e-book from landscape mode to portrait mode, the controller 170 detects the screen switching operation. If the e-book has had a temporary bookmark set to a specific page 1310, the controller 170 displays a window 1320 for showing a message asking whether the user wishes to release the setting of the temporary bookmark when the controller 170 detects the screen switching operation. If the controller 170 ascertains that the user taps the OK button 1321 in the message window 1320, the controller 170 releases the setting of the temporary bookmark. Alternatively, when the controller 170 ascertains that the operation mode of the mobile device 100 is altered, the controller 170 may reset the temporary bookmark, instead of releasing the setting of the temporary bookmark. When the e-book application alters the operation mode, a corresponding e-book may be displayed with a total number of pages that differs from the previous mode. In that case, the page with a temporary bookmark is required to be re-set. To do this, the controller 170 may set a sentence, a word, or an image in a page 1330 with a temporary bookmark to reference location information for setting the temporary bookmark to a page. Therefore, when the operation mode of the e-book application is altered, the controller 170 selects a page to which a temporary bookmark will be reset, based on the set reference location information 1340, and displays the temporary bookmark on the selected page. In that case, the page where the temporary bookmark is reset may include the reference location information 1340.

As described above, the e-book reading application executing system and method according to the present invention allows the user to navigate from a current page in an e-book in an electronic device to a specific page, via touch gestures.

As described above, the e-book reading application executing system and method according to the present invention can be implemented with program commands that can be conducted via various types of computers and recorded in computer-readable recording media. The computer-readable recording media contain program commands, data files, data structures, or the like, or a combination thereof. The program commands recorded in the recording media may be designed or configured to comply with the invention or may be software well-known to the ordinary person skilled in the art. The computer-readable recoding media includes hardware systems for storing and conducting program commands. Examples of the hardware systems are magnetic media such as a hard disk, floppy disk, a magnetic tape, optical media such as CD-ROM and DVD, Magneto-Optical Media, such as floptical disk, ROM, RAM, flash memory, etc. The program commands include assembly language or machine code complied by a complier and a higher level language interpreted by an interpreter. The hardware systems may be implemented with at least one software module to comply with the invention.

In addition, the above-described apparatus and methods according to the present invention can be implemented in hardware, firmware or as software or computer code that can be stored in a recording medium such as a CD ROM, a RAM, a ROM, a floppy disk, DVDs, a hard disk, a magnetic storage media, an optical recording media, or a magneto-optical disk or computer code downloaded over a network originally stored on a remote recording medium, a computer readable recording medium, or a non-transitory machine readable medium and to be stored on a local recording medium, so that the methods described herein can be rendered in such software that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

Although exemplary embodiments of the invention have been described in detail hereinabove, it should be understood that many variations and modifications of the basic inventive concept herein described, which may be apparent to those skilled in the art, will still fall within the scope of the invention as defined in the appended claims.

## Claims

1. A method for executing an e-book reading application in an electronic device with a touch screen, the method comprising:
sensing a touch gesture while a first page of an e-book is displayed;
determining whether the sensed touch gesture corresponds to a touch gesture to turn over pages of the e-book;
identifying, if the sensed touch gesture corresponds to a touch gesture to turn over pages of the e-book, a second page to be turned to according to the touch gesture; and
displaying the second page.

2. The method of claim 1, wherein the second page comprises at least one of:
a page immediately before the first page;
a page immediately after the first page;
the first page of a next chapter;
the first page of a previous chapter; or
a page associated with previously stored user input information.

3. The method of claim 2, wherein the user input information comprises information that the user previously input to or stored in association with the corresponding page.

4. The method of claim 2 or claim 3, wherein the user input information comprises at least one a note, a highlight, or a bookmark.

5. The method of any one of claims 2 to 4, wherein identifying a second page to be turned to further comprises setting, if the touch gesture to turn over pages of the e-book is a multi-touch gesture, the second page to one of the first page of the next chapter, the first page of the previous chapter, and the page associated with previously stored user input information.

6. The method of claim 5, wherein the multi-touch gesture comprises a touch gesture that simultaneously touches a number of separate points on the touch screen.

7. The method of claim 5 or claim 6, wherein identifying a second page to be turned to further comprises setting, if the touch gesture to turn over pages of the e-book is a double flick or a double drag, the second page to the first page of the next chapter or the first page of the previous chapter.

8. The method of claim 5 or claim 6, wherein identifying a second page to be turned to further comprises setting, if the touch gesture to turn over pages of the e-book is a triple flick or a triple drag, the second page to the page associated with previously stored user input information.

9. The method of any one of the preceding claims, further comprising:
setting, if the sensed touch gesture corresponds to a touch gesture to set a temporary bookmark, a temporary bookmark stored in association with the first page; and
displaying later the first page if the second page and an indicator, indicating the temporary bookmark, are displayed and if the indicator is touched.

10. A system for executing an e-book reading application in an electronic device, the system comprising:
a touch screen arranged to sense a touch gesture;
a storage unit arranged to store a look up table, LUT;
a controller arranged to receive an input indicative of the sensed touch gesture from the touch screen while controlling the display of a first page of an e-book, to determine whether the input is indicative of a touch gesture to turn over pages of the e-book by referring to the LUT, and to identify, if the input is indicative of a touch gesture corresponding to a touch gesture to turn over pages of the e-book, a second page to be turned to according to the input; and
a display unit arranged to display the second page.

11. The system of claim 10, wherein the second page comprises at least one of:
a page immediately before the first page;
a page immediately after the first page;
the first page of a next chapter;
the first page of a previous chapter; and
a page associated with previously stored user input information.

12. The system of claim 11, wherein the user input information comprises information that the user previously input to or stored in association with the corresponding page.

13. The system of claim 11 or claim 12, wherein, if the input is indicative of a multi-touch gesture, the controller is arranged to set the second page to one of the first page of the next chapter, the first page of the previous chapter, and the page associated with previously stored user input information.

14. The system of claim 13, wherein the multi-touch gesture comprises a touch gesture that simultaneously touches a number of separate points on the touch screen.

15. The system of claim 10, wherein the controller is arranged to:
set, if the input is indicative of a touch gesture to set a temporary bookmark, a temporary bookmark to the first page; and
display later the first page on the display unit if the second page and an indicator, indicating the temporary bookmark, are displayed and if the indicator is touched.
